# EUROPEAN PATENT SPECIFICATION

(11) **EP 4 272 536 B1**
(45) Date of publication and mention of the grant of the patent: **17.04.2024**
(21) Application number: 23152253.3
(22) Date of filing: 18.01.2023
(51) Int. Cl.: A01D 34/74

(54) **MEANS FOR ADJUSTING CUTTING HEIGHT OF A POWERED LAWN MOWER**
VORRICHTUNG ZUR EINSTELLUNG DER SCHNITTHÖHE EINES ANGETRIEBENEN RASENMÄHERS
DISPOSITIF POUR RÉGLER LA HAUTEUR DE COUPE D'UNE TONDEUSE À GAZON MOTORISÉE

(30) Priority: 02.05.2022 SE 2250532
(43) Date of publication of application: 08.11.2023
(73) Proprietor: Husqvarna AB, 561 82 Huskvarna (SE)
(72) Inventor: JOHANSSON, Jörgen, 553 39 Jönköping (SE)

(56) References cited:
- EP-A1- 3 935 933
- WO-A1-2017/051663
- CN-A- 112 470 678
- SE-A1- 2 051 268
- US-A1- 2021 084 815

## Description

### TECHNICAL FIELD

The present disclosure relates to a lawn mower cutting unit, for example for a robotic lawn mower, where the cutting height can be easily adjusted by a user.

### BACKGROUND

Grass cutting machines are for used for both domestic and commercial applications and can be powered using an electric motor or an internal combustion engine. A so-called rotary cutter employs a cutting member which is rotatable in a plane substantially parallel to the ground and about an axis which is normal to the ground, where the cutting member comprises an arm or a disc that is rotatably supported in its center and has cutting edges arranged at its ends or its circumference.

Automated or robotic power tools such as robotic lawn mowers are becoming increasingly more popular. In a typical deployment a work area, such as a garden, the work area is enclosed by a boundary wire with the purpose of keeping the robotic lawn mower inside the work area. An electric control signal may be transmitted through the boundary wire thereby generating an (electro-) magnetic field emanating from the boundary wire. The robotic working tool is typically arranged with one or more sensors adapted to sense the control signal.

The robotic lawn mower can then cut grass on a user's lawn automatically and can be charged automatically without intervention of the user, and no longer needs to be manually managed after being set once. The robotic lawn mower typically comprises charging skids for contacting corresponding contact plates in a charging station when docking into the charging station for receiving a charging current through, and possibly also for transferring information by means of electrical communication between the charging station and the robotic lawn mower.

Most conventional lawn mowers include some means for adjusting the grass cutting height since different users like to cut their lawns to different lengths, and to cut different areas of their lawns to different lengths. This can depend on grow rate of the grass and the cutting frequency of a particular area, as well as on general user desires regarding height of cut grass.

Most lawn mowers includes means for providing an adjustable height of cutting height, for example wheels or rollers can be connected to a housing in a number of different positions, each position corresponding to a different height of cut, but requires a large number of components in order to adjust the height, and is thus expensive to manufacture.

Cutting height adjustment can also be made by inserting or removing spacers between the cutter blade and the drive shaft to which the cutter blade is fastened. The adjustment involves unbolting the blade from the drive shaft, inserting or removing spacers, and bolting the blade back onto the drive shaft. This operation is relatively cumbersome and time consuming, and requires spacers to be stored.

EP 531071 discloses displacing a cutting member against a compression spring so as to alter the height of cut of mown grass, and EP 766911 discloses displacing the chassis of a lawn mower to alter the height of cut of mown grass.

EP 3935933 discloses a lawn mower comprising at least two engagement plateau arrangements which are connected to a cutting disc, mutually separated along a vertical extension and adapted to receive a coupling member comprised in the transmission axle. This enables the cutting disc to obtain a certain vertical position in dependence of which engagement plateau arrangement that has received the coupling member that is secured by means of screws.

CN 103621244 discloses a mower with a cutterhead and a transmission part that is provided with a matching-connecting face which is connected with the cutterhead in a matched mode. The cutterhead is provided with a first installation face and a second installation face, one on each side of the cutter head, for abutting connection with the matching-connecting face. By turning the cutterhead around, a user can switch between two different cutting heights.

Late-published SE 2 051 268 A1 discloses a lawnmower cutting assembly that comprises a cutting unit, a drive shaft configured to rotate the cutting unit around a common rotation axis Ax, and a height adjustment mechanism. The height adjustment mechanism comprises a first mechanism member that is arranged in an interface between the drive shaft and the cutting unit and is rotationally arranged relative to the drive shaft to allow or cause a change in the position of the cutting unit. The change in the position is relative to the drive shaft in directions coinciding with the common rotation axis Ax when the first mechanism member is rotated from a first position to a second position relative to the drive shaft.

There is, however, a need to provide improved and alternative means for an uncomplicated change of grass cutting height of a lawn mower in a more versatile and efficient manner than previously presented, needing lesser parts and no special tools..

### SUMMARY

The object of the present disclosure is to provide improved and alternative means for setting a grass cutting height of a lawn mower in a more versatile, uncomplicated and efficient manner than previously presented, needing lesser parts and no special tools. This object is achieved by means of a lawn mower cutter unit comprising a cutter propulsion unit with a transmission axle that is adapted to be rotated around a common rotation axis, a hub that is rotatably connected to the transmission axle, a cutting disc, and a knob. The knob is rotatably connected to the hub such that the knob is adapted to rotate with the hub and the transmission axle. The cutting disc is displaceable along the common rotation axis, against a spring force of a spring element. The cutting disc and the knob are comprised in a coupling interface that is comprised in the lawn mower cutter unit and adapted to transfer a rotational torque transferred from the hub to the cutting disc. The coupling interface is adapted to releasably lock the cutting disc in mutually separated positions along the common rotation axis by means of the spring force, conferring an associated certain grass cutting height for each locked position. This means that the grass cutting height can be adjusted by displacing the cutting disc 160 along the common rotation axis Ax and locking the cutting disc 160 in a position that corresponds to a desired grass cutting height.

Furthermore, the cutting disc comprises a connection portion that comprises an aperture and at least two engagement recesses which are formed in the aperture and extend to at last two mutually different depths parallel to the common rotation axis. The knob comprises at least one coupling protrusion that extends away from the common rotation axis and is adapted to transfer a rotational torque transferred from the hub to the cutting disc via a corresponding engagement recess. The recesses are adapted to receive said coupling protrusion in at least two different mounting positions along the common rotation axis. The mounting positions are locked by means of the spring force such that the cutting disc obtains a certain vertical position along the common rotation axis in dependence of which engagement recess that has received the corresponding coupling protrusion.

This means that the grass cutting height can be adjusted by displacing the cutting disc 160 along the common rotation axis Ax and locking the cutting disc 160 in a position that corresponds to a desired grass cutting height without the need of any tools.

According to some aspects, the lawn mower cutter unit further comprises a cover adapted to seal an end of the aperture that is adapted to face the ground surface during operation of the lawn mower cutter unit.

By means of the cover, undesired particles such as grass, debris, and dust are prevented from entering the aperture.

According to some aspects, the common rotation axis extends through a centre portion of the knob. This means that the knob has a symmetrical position with respect to the coupling interface.

According to some aspects, the connection portion comprises at least two pairs of opposing engagement recesses, each pair of opposing engagement recesses having the same depth along the common rotation axis. According to some aspects, the knob comprises two opposing coupling protrusions which are adapted to engage a pair of opposing engagement recesses.

This provides a secure transfer of rotational torque from the knob to the cutting disc via the coupling protrusions when engaging a pair of opposing engagement recesses. According to some aspects, the coupling interface comprises the spring element that is adapted to encompass the hub, the knob, the recesses, a first spring element holder and a second spring element holder.

This means that the coupling interface comprises relatively few parts which leads to low productions cost and reliability.

According to some aspects, the first spring element holder is a retainer ring that is adapted to rest against a motor flange comprised in the cutter propulsion unit and the second spring element holder is comprised in the connection portion. The spring element is in the form of a helical spring that is positioned between the spring element holders.

This means that the spring element can exercise the spring force in a reliable and desired manner.

According to some aspects, the coupling interface comprises a bushing that is adapted to be positioned in the connection portion and to circumvent the hub. The bushing stabilizes the hub.

According to some aspects, the cutting disc is displaceable along the common rotation axis, against the spring force of the spring element, when displaced towards the cutter propulsion unit. This means that the spring force urges the cutting disc away from the cutter propulsion unit and enables an uncomplicated design and easily managed setting of grass cutting height

This object is also achieved by means of lawn mowers comprising a cutter unit according to the invention as defined herein.

### BRIEF DESCRIPTION OF THE DRAWINGS

The present disclosure will now be described more in detail with reference to the appended drawings, where:
- Figure 1: shows a schematic side view of a robotic lawn mower;
- Figure 2: shows a first schematic exploded view of a lawn mower cutter unit comprised in a robotic lawn mower;
- Figure 3: shows a second schematic exploded view of a lawn mower cutter unit comprised in a robotic lawn mower;
- Figure 4: shows a schematic cut-open side view of the lawn mower cutter unit in a first locked position;
- Figure 5: shows a schematic side cut-open view of the lawn mower cutter unit in a second locked position;
- Figure 6: shows a schematic side bottom view of a cutting disc illustrating a first step for setting a grass cutting height;
- Figure 7: shows a schematic bottom view of a cutting disc illustrating a second step for setting a grass cutting height;
- Figure 8: shows a schematic side bottom view of a cutting disc illustrating a third step for setting a grass cutting height; and
- Figure 9: shows a schematic side bottom view of a cutting disc illustrating a fourth step for setting a grass cutting height.

### DETAILED DESCRIPTION

Aspects of the present disclosure will now be described more fully hereinafter with reference to the accompanying drawings. Like numbers in the drawings refer to like elements throughout.

As used herein, the singular forms "a", "an" and "the" are intended to include the plural forms as well, unless the context clearly indicates otherwise.

It should be noted that even though the description given herein will be focused on robotic lawn mowers, the teachings herein may also be applied to any type of lawn mower with a rotary cutter.

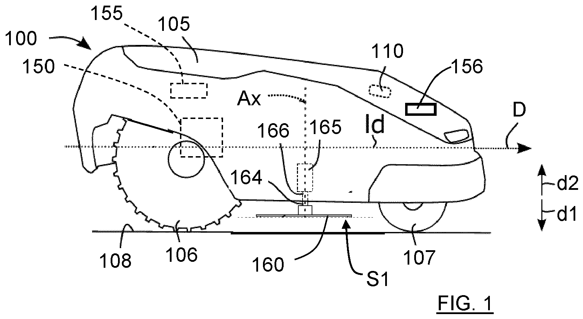

Figure 1 schematically illustrates a lawnmower 100 according to some embodiments of the present disclosure. According to the illustrated embodiments, the lawnmower 100 is a self-propelled autonomous robotic lawnmower 100 capable of navigating and cutting grass in an autonomous manner in an area without the intervention or the control of a user. This can be enabled by means of one or more environmental detection sensors such as Lidar, radar and/or ultrasonic sensors, as well as boundary wire sensors adapted to sense boundary wire control signals. Additionally, or alternatively, navigation devices such as GPS (Global Positioning System) devices can also be used.

Figure 1 shows a schematic side view of a robotic lawn mower 100 that is adapted for a forward travelling direction D, has a body 105 and a plurality of wheels 106, 107; in this example the robotic lawn mower 100 has four wheels 106, 107, two rear wheels 106 and two front wheels 107 which wheels 106, 107 here are shown in contact with a flat ground surface 108.

The robotic lawn mower 100 comprises a control unit 110 and a first electrical motor 150 that is adapted to provide motive power and/or steering of the robotic lawn mower 100. In this example, the rear wheels 106 are powered and constitute drive wheels, and steering may be achieved by rotating the rear wheels 106 in different directions. Wheels that are not powered, here the front wheels 106, constitute support wheels which can be in the form of pivotable castor wheels that follow the travel direction D.

According to further embodiments, the robotic lawn mower 100 may be provided with another number of wheels, such as three wheels. Moreover, according to further embodiments, the robotic lawn mower 100 may be provided with another configuration of driven and non-driven wheels, such as a front wheel drive or an all-wheel drive.

According to the illustrated embodiments, the control unit 110 may be configured to control propulsion of the robotic lawn mower 100, and steer the robotic lawn mower 100, by controlling the drive wheels 106 of the robotic lawn mower 100.

It should be noted that even if the description herein is focused on electric motors, combustion engines may alternatively be used in combination with an electric motor arrangement.

The robotic lawn mower 100 comprises charging skids 156 for contacting contact plates of a charging station (not shown) when docking into the charging station for receiving a charging current, and possibly also for transferring information by means of electrical communication between the charging station and the robotic lawn mower 100.

The robotic lawn mower 100 also comprises at least one rechargeable electric power source such as a battery 155 for providing power to the electric motor arrangement 150. The battery 155 is arranged to be charged by means of received charging current from the charging station, received through the charging skids 156 or other suitable charging connectors.

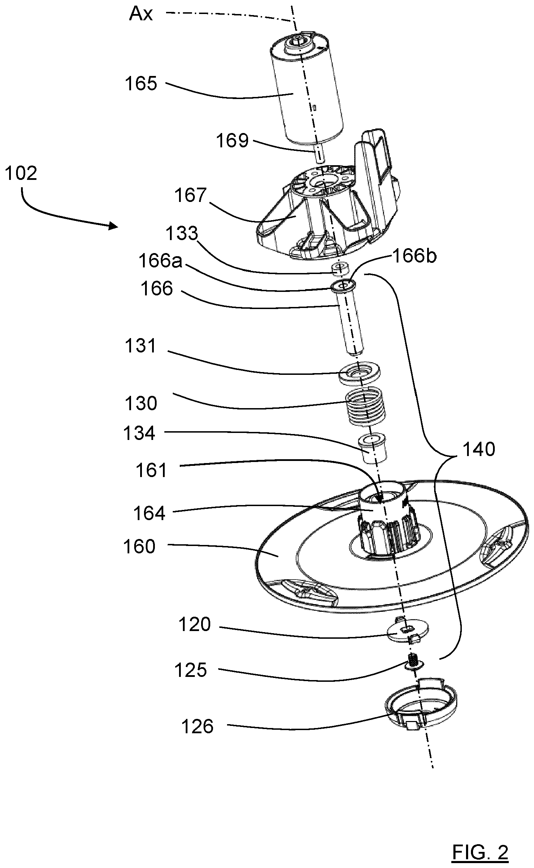

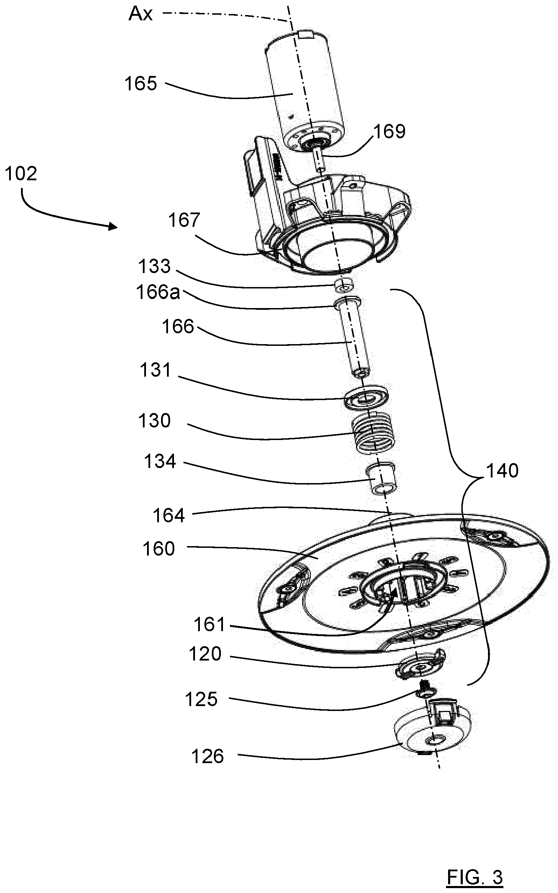

As shown in Figure 2 - Figure 5, the robotic lawn mower 100 also comprises a lawn mower cutter unit 102 that comprises a grass cutting device 160 and a cutter motor 165, or more generally, a cutter propulsion unit 165, that also is powered by the battery 155 or, alternatively, by a separate power source. The cutter propulsion unit 165 is adapted to drive the cutter propulsion unit 165 and comprises a transmission axle 169 that is adapted to be rotated around a common rotation axis Ax.

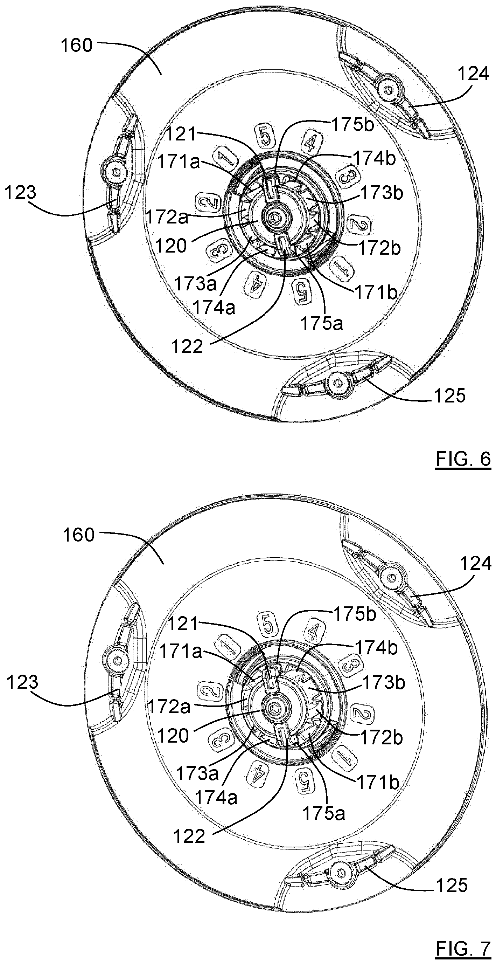

In this example, as shown in Figure 6 - Figure 9, the grass cutting device 160 is constituted by a cutting disc 160 that according to some aspects comprises a plurality of cutting edges such as cutting knifes 123, 124, 125. According to some aspects, each cutting knife 123, 124, 125 is pivotally arranged such that during normal operation they are maintained at a working position due to centripetal forces, radially extending outwards from the cutting disc's center. Many types of cutting edges and number of cutting edges are of course conceivable.

With reference also to Figure 2 - Figure 5, the lawn mower cutter unit 102 comprises a hub 166 that is rotatably connected to the transmission axle 169, a knob 120 that is rotatably connected to the hub 166 such that the knob 120 is adapted to rotate with the hub 166 and the transmission axle 169.

According to the present disclosure, the cutting disc 160 is displaceable along the common rotation axis Ax, against a spring force of a spring element 130. The cutting disc 160 and the knob 120 are comprised in a coupling interface 140 that is adapted to transfer a rotational torque transferred from the hub 166 to the cutting disc 160. The coupling interface 140 is adapted to releasably lock the cutting disc 160 in mutually separated positions along the common rotation axis Ax by means of the spring force, conferring an associated certain grass cutting height for each locked position. The coupling interface 140 is comprised in the lawn mower cutter unit 102.

This means that the grass cutting height can be adjusted by displacing the cutting disc 160 along the common rotation axis Ax and locking the cutting disc 160 in a positioned that corresponds to a desired grass cutting height.

The cutting disc 160 comprises a connection portion 164 that comprises an aperture 161 and at least two engagement recesses 171a, 171b; 172a, 172b; 173a, 173b; 174a, 174b; 175a, 175b which are formed in the aperture 161 and extend to at last two mutually different depths parallel to the common rotation axis Ax. The knob 120 comprises at least one coupling protrusion 121, 122 that extends away from the common rotation axis Ax and is adapted to transfer a rotational torque transferred from the hub 166 to the cutting disc 160 via a corresponding engagement recess 171a, 171b; 172a, 172b; 173a, 173b; 174a, 174b; 175a, 175b. The recesses 171a, 171b; 172a, 172b; 173a, 173b; 174a, 174b; 175a, 175b are adapted to receive said coupling protrusion 121,122 in at least two different mounting positions along the common rotation axis Ax, where the mounting positions are locked by means of the spring force such that the cutting disc 160 obtains a certain vertical position along the common rotation axis Ax in dependence of which engagement recess 171a, 171b; 172a, 172b; 173a, 173b; 174a, 174b; 175a, 175b that has received the corresponding coupling protrusion 121, 122.

This means that the grass cutting height can be adjusted by displacing the cutting disc 160 along the common rotation axis Ax and locking the cutting disc 160 in a positioned that corresponds to a desired grass cutting height without the need of any tools.

According to some aspects, the cutting disc 160 is displaceable along the common rotation axis Ax, against the spring force of the spring element 130, when displaced towards the cutter propulsion unit 165. This means that the spring force urges the cutting disc away from the cutter propulsion unit 165 and enables an uncomplicated design and easily managed setting of grass cutting height. This is the case for the example illustrated in Figure 2-9.

It is also conceivable that the cutting disc 160 is displaceable along the common rotation axis Ax, against a spring force of a spring element, when displaced away from the cutter propulsion unit 165, for example pulled towards a user, when adjusting the grass cutting height. In that case, the coupling interface 140 has to be designed accordingly, for example the recesses will have to run in an opposite direction along the common rotation axis Ax. The details of such a design are not described here, but can of course easily be implemented by the skilled person.

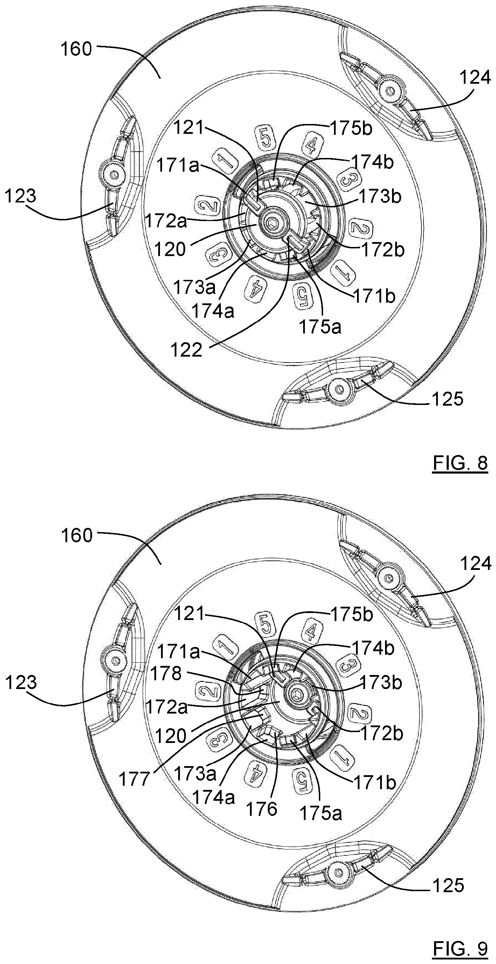

According to some aspects, the connection portion 164 comprises at least two pairs of opposing engagement recesses 171a, 171b; 172a, 172b; 173a, 173b; 174a, 174b; 175a, 175b, each pair of opposing engagement recesses 171a, 171b; 172a, 172b; 173a, 173b; 174a, 174b; 175a, 175b having the same depth along the common rotation axis Ax. The depth of each recess 171a, 171b; 172a, 172b; 173a, 173b; 174a, 174b; 175a, 175b is limited by a corresponding heel 176, 177, 178 against which each coupling protrusions 121, 122 rest, being pressed towards the corresponding heel 176, 177, 178 by means of the spring force of the spring element 130 (only a few feels 176, 177, 178 indicated in Figure 9 for reasons of clarity).

In the example illustrated in Figure 2 - Figure 9, the connection portion 164 comprises five pairs of opposing engagement recesses 171a, 171b; 172a, 172b; 173a, 173b; 174a, 174b; 175a, 175b, which are numbered 1-5 in the cutting disc 160, and, according to some further aspects, the knob 120 comprises two opposing coupling protrusions 121, 122 which are adapted to engage a pair of opposing engagement recesses 171a, 171b; 172a, 172b; 173a, 173b; 174a, 174b; 175a, 175b. In the example, there is a first pair of opposing engagement recesses 171a, 171b, a second pair of opposing engagement recesses 172a, 172b, a third pair of opposing engagement recesses 173a, 173b, a fourth pair of opposing engagement recesses 174a, 175b, and a fifth pair of opposing engagement recesses 175a, 175b. The depth decreases step-wise from the first pair of opposing engagement recesses 171a, 171b to the fifth pair of opposing engagement recesses 175a, 175b.

This provides a secure transfer of rotational torque from the knob 120 to the cutting disc 160 via the coupling protrusions 121, 122 when engaging a pair of opposing engagement recesses 171a, 171b; 172a, 172b; 173a, 173b; 174a, 174b; 175a, 175b.

According to some aspects, the knob 120 is accessible from a bottom side S1 of the robotic lawn mower 100, which bottom side S1 faces a ground surface 108 during operation of the robotic lawn mower 100.

This means that the knob is easily accessible when the grass cutting height is to be adjusted.

According to some aspects, the coupling interface 140 comprises the spring element 130 that is adapted to encompass the hub 166. The coupling interface 140 further comprises the knob 120, the recesses 171a, 171b; 172a, 172b; 173a, 173b; 174a, 174b; 175a, 175b, a first spring element holder 131 and a second spring element holder 132.

This means that the coupling interface 140 comprises relatively few parts which leads to low productions cost and reliability.

According to some aspects, the common rotation axis Ax extends through a centre portion of the knob 120. This means that the knob 120 has a symmetrical position with respect to the coupling interface 140.

According to some aspects, the cutter propulsion unit 165 is mounted in a motor flange 167 which holds the cutter propulsion unit 165 in a fixed position. According to some further aspects, the first spring element holder 131 is a retainer ring that is adapted to rest against a motor flange 167 and the second spring element holder 132 is comprised in the connection portion 164, where the spring element 130 is in the form of a helical spring that is positioned between the spring element holders 131, 132. This means that the spring element 130 can exercise the spring force in a reliable and desired manner.

According to some aspects, the second spring element holder 132 is a separate part that is fitted into the connection portion 164.

According to some aspects, the coupling interface 140 comprises a bushing 134 that is adapted to be positioned in the connection portion 164 and to circumvent the hub 166. The hub 166 runs within the bushing 134 that stabilizes the hub 166. According to some aspects, the bushing 134 is either a separate part or integral with the connection portion 164.

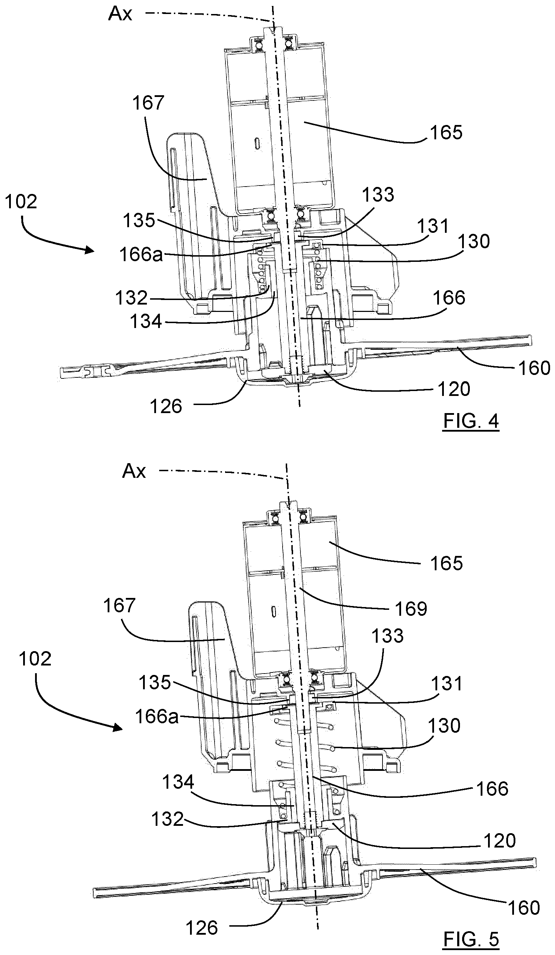

In accordance with some aspects, an example of the working of the coupling interface 140 will now be described more in detail. Figure 4 and Figure 6 show the cutting disc 160 in a highest position, farthest to the ground surface 108, and corresponding to a maximum grass cutting height. The helical spring 130 runs between the retainer ring 131 and the second spring element holder 132 that is comprised in the connection portion 164.

The retainer ring 131 rests on a flange part 166a of the hub 166 such that the helical spring 130, the retainer ring 131 and the second spring element holder 132 are adapted to rotate together with the hub 166. An annular seal 133 circumvents the transmission axle 169 to provide sealing, the annular seal being fitted in a collar part 135 that is comprised in the motor flange 167. The helical spring 130 is here in its most compressed state in a running position, the coupling protrusions 121, 122 engage the heels of the fifth pair of opposing engagement recesses 175a, 175b having the smallest depths along the common rotation axis Ax and are marked with "5" on the cutting disc 160. This brings the cutting disc 160 to a running position closest to the cutter propulsion unit 165.

In Figure 7, the cutting disc 160 is pressed towards the cutter propulsion unit 165, against the spring force, such that the coupling protrusions 121, 122 are brought out of engagement, and thus out of contact, with the heels of the fifth pair of opposing engagement recesses 175a, 175b. This means that the helical spring 130 is compressed a little bit more than its most compressed state in a running position, and the cutting disc 160 is brought even closer to the cutter propulsion unit 165.

Now, as illustrated in Figure 8, the cutting disc can be rotated relative the knob 120, around the common rotation axis Ax, such that another pair of opposing recesses can be chosen for the coupling protrusions 121, 122, in this example the first pair of opposing engagement recesses 171a, 171b having the largest depth along the common rotation axis Ax and are marked with "1" on the cutting disc 160 are chosen.

As illustrated in Figure 5 and Figure 9, when the cutting disc 160 is released, the spring force brings the coupling protrusions 121, 122 in engagement with the heels of the chosen first pair of opposing engagement recesses 171a, 171b which brings the cutting disc 160 to its lowest position, closest to the ground surface 108, and corresponding to a minimum grass cutting height. The helical spring 130 is here in its most expanded state, the coupling protrusions 121, 122 engage the first pair of opposing engagement recesses 171a, 171b which have the largest depth along the common rotation axis Ax.

In this manner, any one of the pair of opposing recesses can be chosen for the coupling protrusions 121, 122, conferring a corresponding grass cutting height by positioning the cutting disc 160 in a corresponding position along the common rotation axis Ax.

When the cutting disc 160 is properly positioned, a cover 126 can be used to seal an end of the aperture 161 that is adapted to face the ground surface 108 during operation of the lawn mower cutter unit 102, and this during operation of the robotic lawn mower 100. By means of the cover, undesired particles such as grass, debris, and dust are prevented from entering the aperture 161.

The collar part 135 is adapted to not be in contact with the hub 166, in Figure 2, Figure 4 and Figure 5 it is indicated that the collar part 166a comprises a step 166b (indicated in Figure 2) to avoid said contact.

For example, although the description above has been directed to a robotic lawn mower 100, the present disclosure is applicable for any type of lawn mower with at least one motor-powered cutting disc such as for example a robotic lawn mower, a hand-moved lawn mower with or without motor-powered wheels, as well as a riding mower.

Although two coupling protrusions are shown in the example, the knob may comprise more or less coupling protrusions. At least one coupling protrusion is adapted to engage a corresponding heel of a recess such that a grass cutting height is defined by the position of the cutting disc 160 along the common rotation axis Ax.

The connection portion 164 comprises at least two engagement recesses with mutually different depths long the common rotation axis Ax. As described previously, the engagement recesses may be arranged pair-wise opposing each other with respect to the common rotation axis Ax, where two opposing engagement recesses have mutually equal depths along the common rotation axis Ax. In this case, there should be at least two pairs of opposing engagement recesses where the pairs have mutually different depths along the common rotation axis Ax.

According to some aspects, the hub 166 is press-fitted to the transmission axle 169. According to some aspects, the hub 166 and the transmission axle 169 have a cylindrical shape and run along the common rotation axis Ax. The hub 166 may be at least partly hollow, allowing it to be thread over the transmission axle 169 and fitted tightly by means of press-fitting or other type of fitting. Other ways to secure the hub 166 to the transmission axle 169 are of course conceivable such as for example glue, welding, and/or fastening screws or pins. It is even conceivable that the hub 166 and the transmission axle 169 are formed as one and the same part. According to some aspects, the hub 166 and the retainer ring 131 are formed as one and the same part. According to some further aspects, the retainer ring 131 is attached to the hub 166.

According to some aspects, the knob is attached to the hub by means of a screw 125, enabling an uncomplicated replacement if, for example, one or more coupling protrusions brakes. Such a screw may be comprised in the coupling interface 140.

Other types of springs elements are conceivable, the cutting disc 160 should be displaceable along the common rotation axis Ax, against the spring force of the spring element 130, according to some aspects when displaced towards the cutter propulsion unit 165.

According to some aspects, the lawn mower cutter unit 102 comprises the coupling interface 140, the cover 126, the seal 133, the motor flange 167 and the cutter propulsion unit 165. According to some aspects, some details such as the cover 126 and the seal 133 are optional in the lawn mower cutter unit 102.

## Claims

1. A lawn mower cutter unit (102) comprising a cutter propulsion unit (165) with a transmission axle (169) that is adapted to be rotated around a common rotation axis (Ax), a hub (166) that is rotatably connected to the transmission axle (169), a cutting disc (160), and a knob (120) that is rotatably connected to the hub (166) such that the knob (120) is adapted to rotate with the hub (166) and the transmission axle (169), wherein the cutting disc (160) is displaceable along the common rotation axis (Ax), against a spring force of a spring element (130), where the cutting disc (160) and the knob (120) are comprised in a coupling interface (140) that is comprised in the lawn mower cutter unit (102) and adapted to transfer a rotational torque transferred from the hub (166) to the cutting disc (160), the coupling interface (140) being adapted to releasably lock the cutting disc (160) in mutually separated positions along the common rotation axis (Ax) by means of the spring force, conferring an associated certain grass cutting height for each locked position, wherein the cutting disc (160) comprises a connection portion (164) that comprises an aperture (161) and at least two engagement recesses (171a, 171b; 172a, 172b; 173a, 173b; 174a, 174b; 175a, 175b) which are formed in the aperture (161) and extend to at last two mutually different depths parallel to the common rotation axis (Ax), and where the knob (120) comprises at least one coupling protrusion (121, 122) that extends away from the common rotation axis (Ax) and is adapted to transfer a rotational torque transferred from the hub (166) to the cutting disc (160) via a corresponding engagement recess (171a, 171b; 172a, 172b; 173a, 173b; 174a, 174b; 175a, 175b), the recesses (171a, 171b; 172a, 172b; 173a, 173b; 174a, 174b; 175a, 175b) being adapted to receive said coupling protrusion (121,122) in at least two different mounting positions along the common rotation axis (Ax), where the mounting positions are locked by means of the spring force such that the cutting disc (160) obtains a certain vertical position along the common rotation axis (Ax) in dependence of which engagement recess (171a, 171b; 172a, 172b; 173a, 173b; 174a, 174b; 175a, 175b) that has received the corresponding coupling protrusion (121, 122).

2. The lawn mower cutter unit (102) according to claim 1, further comprising a cover (126) adapted to seal an end of the aperture (161) that is adapted to face the ground surface (108) during operation of the lawn mower cutter unit (102).

3. The lawn mower cutter unit (102) according to any one of the previous claims, wherein the common rotation axis (Ax) extends through a centre portion of the knob (120).

4. The lawn mower cutter unit (102) according to any one of the previous claims, wherein the connection portion (164) comprises at least two pairs of opposing engagement recesses (171a, 171b; 172a, 172b; 173a, 173b; 174a, 174b; 175a, 175b), each pair of opposing engagement recesses (171a, 171b; 172a, 172b; 173a, 173b; 174a, 174b; 175a, 175b) having the same depth along the common rotation axis (Ax).

5. The lawn mower cutter unit (102) according to claim 4, wherein the knob (120) comprises two opposing coupling protrusions (121, 122) which are adapted to engage a pair of opposing engagement recesses (171a, 171b; 172a, 172b; 173a, 173b; 174a, 174b; 175a, 175b).

6. The lawn mower cutter unit (102) according to any one of the previous claims, wherein the coupling interface (140) comprises
- the spring element (130) that is adapted to encompass the hub (166),
- the knob (120),
- the recesses (171a, 171b; 172a, 172b; 173a, 173b; 174a, 174b; 175a, 175b),
- a first spring element holder (131) and
- a second spring element holder (132).

7. The lawn mower cutter unit (102) according to claim 6, wherein the first spring element holder (131) is a retainer ring that is adapted to rest against a motor flange (167) comprised in the cutter propulsion unit (165) and the second spring element holder (132) is comprised in the connection portion (164), where the spring element (130) is in the form of a helical spring that is positioned between the spring element holders (131 132).

8. The lawn mower cutter unit (102) according to any one of the previous claims, wherein the coupling interface (140) comprises a bushing (134) that is adapted to be positioned in the connection portion (164) and to circumvent the hub (166).

9. The lawn mower cutter unit (102) according to any one of the previous claims, wherein the cutting disc (160) is displaceable along the common rotation axis (Ax), against the spring force of the spring element (130), when displaced towards the cutter propulsion unit (165).

10. A lawn mower (100) comprising the lawn mower cutter unit (102) according to any one of the claims 1-9.

11. The lawn mower (100) according to claim 10, wherein the knob (120) is accessible from a bottom side (S1) of the lawn mower (100), which bottom side (S1) faces a ground surface (108) during operation of the lawn mower (100).

## Patentansprüche

1. Rasenmähermessereinheit (102), umfassend eine Messerantriebseinheit (165) mit einer Getriebeachse (169), die dazu eingerichtet ist, um eine gemeinsame Drehachse (Ax) drehbar zu sein, eine Nabe (166), die mit der Getriebeachse (169) drehbar verbunden ist, eine Messerscheibe (160) und einen Knebel (120), der mit der Nabe (166) drehbar verbunden ist, sodass der Knebel (120) dazu eingerichtet ist, sich mit der Nabe (166) und der Getriebeachse (169) zu drehen, wobei die Messerscheibe (160) entlang der gemeinsamen Drehachse (Ax) entgegen einer Federkraft eines Federelements (130) verschiebbar ist, wobei die Messerscheibe (160) und der Knebel (120) in einer Kopplungsschnittstelle (140) enthalten sind, die in der Rasenmähermessereinheit (102) enthalten und dazu eingerichtet ist, ein von der Nabe (166) auf die Messerscheibe (160) übertragenes Drehmoment zu übertragen, wobei die Kopplungsschnittstelle (140) dazu eingerichtet ist, die Messerscheibe (160) mittels der Federkraft lösbar in voneinander getrennten Positionen entlang der gemeinsamen Drehachse (Ax) zu arretieren, wobei jeder arretierten Position eine entsprechende Grasschneidehöhe zugeordnet ist, wobei die Messerscheibe (160) einen Verbindungsabschnitt (164) umfasst, der eine Öffnung (161) und mindestens zwei Eingriffsaussparungen (171a, 171b; 172a, 172b; 173a, 173b; 174a, 174b; 175a, 175b), die in der Öffnung (161) ausgebildet sind und sich zu mindestens zwei voneinander unterschiedlichen Tiefen parallel zu gemeinsamen Drehachse (Ax) erstrecken, umfasst, und wobei der Knebel (120) mindestens einen Kopplungsvorsprung (121, 122) umfasst, der sich von der gemeinsamen Drehachse (Ax) weg erstreckt und dazu eingerichtet ist, ein von der Nabe (166) zur Messerscheibe (160) übertragenes Drehmoment über zugehörige Eingriffsaussparungen (171a, 171b; 172a, 172b; 173a, 173b; 174a, 174b; 175a, 175b) zu übertragen, wobei die Aussparungen (171a, 171b; 172a, 172b; 173a, 173b; 174a, 174b; 175a, 175b) dazu eingerichtet sind, den Kopplungsvorsprung (121, 122) in mindestens zwei verschiedenen Montagepositionen entlang der gemeinsamen Drehachse (Ax) aufzunehmen, wobei die Montagepositionen mittels der Federkraft derart arretiert sind, dass die Messerscheibe (160) in Abhängigkeit davon, welche Eingriffsaussparung (171a, 171b; 172a, 172b; 173a, 173b; 174a, 174b; 175a, 175b) den zugehörigen Kopplungsvorsprung (121, 122) erhalten hat, eine bestimme vertikale Position entlang der gemeinsamen Drehachse (Ax) erhält.

2. Rasenmähermessereinheit (102) nach Anspruch 1, ferner umfassend eine Abdeckung (126), die dazu eingerichtet ist, ein Ende der Öffnung (161) zu verschließen, das dazu eingerichtet ist, der Bodenfläche (108) während des Betriebs der Rasenmähermessereinheit (102) zugewandt zu sein.

3. Rasenmähermessereinheit (102) nach einem der vorstehenden Ansprüche, wobei sich die gemeinsame Drehachse (Ax) durch einen Mittelabschnitt des Knebels (120) erstreckt.

4. Rasenmähermessereinheit (102) nach einem der vorstehenden Ansprüche, wobei der Verbindungsabschnitt (164) mindestens zwei Paar entgegengesetzte Eingriffsaussparungen (171a, 171b; 172a, 172b; 173a, 173b; 174a, 174b; 175a, 175b) umfasst, wobei jedes Paar entgegengesetzte Eingriffsaussparungen (171a, 171b; 172a, 172b; 173a, 173b; 174a, 174b; 175a, 175b) entlang der gemeinsamen Drehachse (Ax) dieselbe Tiefe aufweist.

5. Rasenmähermessereinheit (102) nach Anspruch 4, wobei der Knebel (120) zwei entgegengesetzte Kopplungsvorsprünge (121, 122) umfasst, die dazu eingerichtet sind, in ein Paar entgegengesetzte Eingriffsaussparungen (171a, 171b; 172a, 172b; 173a, 173b; 174a, 174b; 175a, 175b) einzugreifen.

6. Rasenmähermessereinheit (102) nach einem der vorstehenden Ansprüche, wobei die Kopplungsschnittstelle (140) Folgendes umfasst:
- das Federelement (130), das dazu eingerichtet ist, die Nabe (166) zu umschließen,
- den Knebel (120),
- die Aussparungen (171a, 171b; 172a, 172b; 173a, 173b; 174a, 174b; 175a, 175b),
- eine erste Federelementhalterung (131) und
- eine zweite Federelementhalterung (132).

7. Rasenmähermessereinheit (102) nach Anspruch 6, wobei die erste Federelementhalterung (131) ein Sprengring ist, der dazu eingerichtet ist, an einem Motorflansch (167) anzuliegen, der in der Messerantriebseinheit (165) enthalten ist, und wobei die zweite Federelementhalterung (132) im Verbindungsabschnitt (164) enthalten ist, wobei das Federelement (130) in Form einer Schraubenfeder zwischen den Federelementhalterungen (131, 132) positioniert ist.

8. Rasenmähermessereinheit (102) nach einem der vorstehenden Ansprüche, wobei die Kopplungsschnittstelle (140) eine Buchse (134) umfasst, die dazu eingerichtet ist, im Verbindungsabschnitt (164) positioniert zu sein und die Nabe (166) zu umgeben.

9. Rasenmähermessereinheit (102) nach einem der vorstehenden Ansprüche, wobei die Messerscheibe (160) entlang der gemeinsamen Drehachse (Ax) entgegen der Federkraft des Federelements (130) verschiebbar ist, wenn sie zur Messerantriebseinheit (165) hin verschoben wird.

10. Rasenmäher (100), umfassend die Rasenmähermessereinheit (102) nach einem der Ansprüche 1-9.

11. Rasenmäher (100) nach Anspruch 10, wobei der Knebel (120) von der Unterseite (S1) des Rasenmähers (100) zugänglich ist, wobei die Unterseite (S1) der Bodenfläche (108) während des Betriebs des Rasenmähers (100) zugewandt ist.

## Revendications

1. Unité coupeuse de tondeuse à gazon (102) comprenant une unité de propulsion de coupeuse (165) avec un essieu de transmission (169) qui est adapté pour être mis en rotation autour d'un axe de rotation commun (Ax), un moyeu (166) qui est relié de façon rotative à l'essieu de transmission (169), un disque coupeur (160), et une douille (120) qui est reliée de façon rotative au moyeu (166) de telle sorte que la douille (120) soit adaptée pour entrer en rotation avec le moyeu (166) et l'essieu de transmission (169), dans laquelle le disque coupeur (160) est déplaçable le long de l'axe de rotation commun (Ax), contre une force de ressort d'un élément ressort (130), où le disque coupeur (160) et la douille (120) sont compris dans une interface de couplage (140) qui est comprise dans l'unité coupeuse de tondeuse à gazon (102) et adaptée pour transférer un couple rotationnel transféré, depuis le moyeu (166), au disque coupeur (160), l'interface de couplage (140) étant adaptée pour verrouiller de façon libérable le disque coupeur (160) dans des positions mutuellement séparées le long de l'axe de rotation commun (Ax) au moyen de la force de ressort, conférant une certaine hauteur de coupe d'herbe associée, pour chaque position verrouillée, dans laquelle
le disque coupeur (160) comprend une partie de liaison (164) qui comprend une ouverture (161) et au moins deux évidements d'entrée en prise (171a, 171b ; 172a, 172b ; 173a, 173b ; 174a, 174b ; 175a, 175b) qui sont formés dans l'ouverture (161) et s'étendent jusqu'au moins deux profondeurs mutuellement différentes parallèles à l'axe de rotation commun (Ax), et où la douille (120) comprend au moins une saillie de couplage (121, 122) qui s'étend à l'opposé de l'axe de rotation commun (Ax) et est adaptée pour transférer un couple rotationnel transféré, depuis le moyeu (166), au disque coupeur (160) par l'intermédiaire d'un évidement d'entrée en prise correspondant (171a, 171b ; 172a, 172b ; 173a, 173b ; 174a, 174b ; 175a, 175b), les évidements (171a, 171b ; 172a, 172b ; 173a, 173b ; 174a, 174b ; 175a, 175b) étant adaptés pour recevoir ladite saillie de couplage (121, 122) dans au moins deux positions de montage différentes le long de l'axe de rotation commun (Ax), où les positions de montage sont verrouillées au moyen de la force de ressort, de telle sorte que le disque coupeur (160) obtienne une certaine position verticale le long de l'axe de rotation commun (Ax) en fonction de l'évidement, parmi les évidements d'entrée en prise (171a, 171b ; 172a, 172b ; 173a, 173b ; 174a, 174b ; 175a, 175b), qui a reçu la saillie de couplage correspondante (121, 122).

2. Unité coupeuse de tondeuse à gazon (102) selon la revendication 1, comprenant en outre
un couvercle (126) adapté pour fermer de façon étanche une extrémité de l'ouverture (161) qui est adaptée pour faire face à la surface de sol (108) durant le fonctionnement de l'unité coupeuse de tondeuse à gazon (102).

3. Unité coupeuse de tondeuse à gazon (102) selon l'une quelconque des revendications précédentes, dans laquelle l'axe de rotation commun (Ax) s'étend à travers une partie centrale de la douille (120).

4. Unité coupeuse de tondeuse à gazon (102) selon l'une quelconque des revendications précédentes, dans laquelle la partie de liaison (164) comprend au moins deux paires d'évidements d'entrée en prise opposés (171a, 171b ; 172a, 172b ; 173a, 173b ; 174a, 174b ; 175a, 175b), chaque paire d'évidements d'entrée en prise opposés (171a, 171b ; 172a, 172b ; 173a, 173b ; 174a, 174b ; 175a, 175b) ayant la même profondeur le long de l'axe de rotation commun (Ax).

5. Unité coupeuse de tondeuse à gazon (102) selon la revendication 4, dans laquelle la douille (120) comprend deux saillies de couplage opposées (121, 122) qui sont adaptées pour entrer en prise avec une paire d'évidements d'entrée en prise opposés (171a, 171b ; 172a, 172b ; 173a, 173b ; 174a, 174b ; 175a, 175b).

6. Unité coupeuse de tondeuse à gazon (102) selon l'une quelconque des revendications précédentes, dans laquelle l'interface de couplage (140) comprend
- l'élément ressort (130) qui est adapté pour entourer le moyeu (166),
- la douille (120),
- les évidements (171a, 171b ; 172a, 172b ; 173a, 173b ; 174a, 174b ; 175a, 175b),
- un premier support d'élément ressort (131), et
- un second support d'élément ressort (132).

7. Unité coupeuse de tondeuse à gazon (102) selon la revendication 6, dans laquelle le premier support d'élément ressort (131) est une bague de retenue qui est adaptée pour reposer contre une bride de moteur (167) comprise dans l'unité de propulsion de coupeuse (165) et le second support d'élément ressort (132) est compris dans la partie de liaison (164), où l'élément ressort (130) est sous la forme d'un ressort hélicoïdal qui est positionné entre les supports d'élément ressort (131 132).

8. Unité coupeuse de tondeuse à gazon (102) selon l'une quelconque des revendications précédentes, dans laquelle l'interface de couplage (140) comprend un manchon (134) qui est adapté pour être positionné dans la partie de liaison (164) et pour entourer le moyeu (166).

9. Unité coupeuse de tondeuse à gazon (102) selon l'une quelconque des revendications précédentes, dans laquelle le disque coupeur (160) est déplaçable le long de l'axe de rotation commun (Ax), contre la force de ressort de l'élément ressort (130), lorsqu'il est déplacé vers l'unité de propulsion de coupeuse (165).

10. Tondeuse à gazon (100) comprenant l'unité coupeuse de tondeuse à gazon (102) selon l'une quelconque des revendications 1 à 9.

11. Tondeuse à gazon (100) selon la revendication 10, dans laquelle la douille (120) est accessible depuis un côté inférieur (S1) de la tondeuse à gazon (100), lequel côté inférieur (S1) fait face à une surface de sol (108) durant le fonctionnement de la tondeuse à gazon (100).
